# EUROPEAN PATENT APPLICATION

(11) **EP 4 546 503 A1**
(43) Date of publication of application: **30.04.2025**
(21) Application number: 24205573.9
(22) Date of filing: 09.10.2024
(51) Int. Cl.: H01M 10/48, H01M 50/204, H01M 50/342, H01M 50/578, H01M 50/581

(54) **BATTERY SYSTEM**

(30) Priority: 25.10.2023 JP 2023182888; 19.04.2024 JP 2024068375
(71) Applicant: Prime Planet Energy & Solutions, Inc., Chuo-ku, Tokyo 103-0022 (JP)
(72) Inventor: YANO, Junya, Tokyo, 103-0022 (JP)
(74) Representative: Kuhnen & Wacker Patent- und Rechtsanwaltsbüro PartG mbB

(57) **Abstract**

A battery system includes a plurality of cells, a hermetically sealed pack case, a first abnormality detection sensor, a second abnormality detection sensor, and a controller. The plurality of cells each includes a hermetically sealed cell case. The cell case includes a first pressure valve configured to irreversibly rupture by a predetermined activation pressure. The controller is configured to execute an abnormality determination process of determining that an abnormality occurs in at least one of the plurality of cells if the pressure value detected by the first abnormality detection sensor is higher than a predetermined threshold value and the detection value detected by the second abnormality detection sensor is higher than a predetermined threshold value.

## Description

The present disclosure relates to battery systems.

### BACKGROUND

JP 2022-518720 A discloses a vehicle battery fire detection device including a battery pack mounted on a vehicle structure, an electronic control unit, and a communication means. The battery pack includes a battery module, a battery management system, and a battery pack case. The battery management system transmits a signal received from the battery module to the electronic control unit. The battery pack case includes a gas discharge part from which a venting gas is discharged. The battery pack case also includes a sensor that measures at least one of the temperature or pressure of the gas discharged from the gas discharge part. It is stated that such a vehicle battery fire detection device is able to detect a fire if the fire occurs inside the battery pack and notify the occupants of that.

JP 2023-522766 A discloses a battery system including a battery pack, a pressure sensor, and a battery management system. The battery pack includes a plurality of battery cells. The pressure sensor measures the internal pressure of the battery pack at each sampling period. The battery management system calculates a reference pressure based on the internal pressure measured at each sampling period. The battery management system calculates a pressure variation from the difference between the reference pressure and the internal pressure measured at each sampling period. The battery management system judges that a thermal event has occurred in the battery pack if the pressure variation is greater than or equal to a predetermined critical pressure and the internal pressure measured at each sampling period continuously increases at least two times. It is stated that such a battery system is able to detect a thermal event of the battery.

### SUMMARY

The present inventor intends to improve the accuracy of detection of abnormality that occurs in a cell.

According to the present disclosure, a battery system includes a plurality of cells, a hermetically sealed pack case, a first abnormality detection sensor, a second abnormality detection sensor, and a controller. The pack case houses a plurality of cells. The first abnormality detection sensor is disposed in the pack case. The second abnormality detection sensor is disposed in the pack case. Each of the plurality of cells includes an electrode body and a hermetically sealed cell case housing the electrode body. The cell case includes a first pressure valve configured to irreversibly rupture by a predetermined activation pressure. The pack case includes a second pressure valve to be released at a predetermined pressure. The first abnormality detection sensor is a sensor that detects a pressure value in the pack case. The second abnormality detection sensor is a sensor that detects at least one of detection values including a pressure value, a temperature, and a generated gas in the pack case. The controller is configured to execute an abnormality determination process of determining that an abnormality occurs in at least one of the plurality of cells if the pressure value detected by the first abnormality detection sensor is higher than a predetermined threshold value and the detection value detected by the second abnormality detection sensor is higher than a predetermined threshold value.

The just-described battery system provides good accuracy in detecting an abnormality that occurs in the cells.

### BRIEF DESCRIPTION OF THE DRAWINGS

Fig. 1 is a schematic view illustrating a battery system 1.
Fig. 2 is a flowchart illustrating processes executed by a controller 50.
Fig. 3 is a schematic view illustrating a battery system 1A according to another embodiment.
Fig. 4 is a flowchart illustrating processes executed by a controller 50 of the battery system 1A.

### DETAILED DESCRIPTION

Hereinbelow, embodiments of the technology according to the present disclosure will be described with reference to the drawings. It should be noted, however, that the disclosed embodiments are, of course, not intended to limit the disclosure. The drawings are depicted schematically and do not necessarily accurately depict actual objects. The features and components that exhibit the same effects are designated by the same reference symbols as appropriate, and the description thereof will not be repeated as appropriate.

### Battery System 1

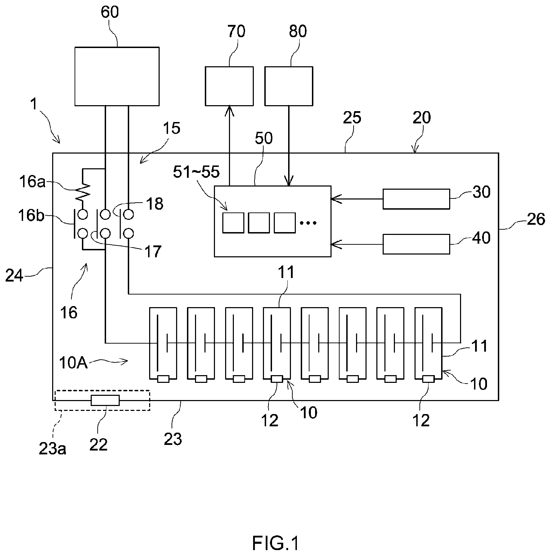

Fig. 1 is a schematic view illustrating a battery system 1. The battery system 1 is an assembly also referred to as a battery pack, which includes battery cells, a configuration for controlling the cells, a safety device, and so forth. As illustrated in Fig. 1, the battery system 1 includes a plurality of cells 10, a pack case 20, a first abnormality detection sensor 30, a second abnormality detection sensor 40, and a controller 50. The battery system 1 also includes a contactor unit 15. The pack case 20 is a hermetically sealed-type case that houses the plurality of cells 10. The first abnormality detection sensor 30 and the second abnormality detection sensor 40 are disposed in the pack case 20.

The battery system 1 is connected in series to a load 60 via an external output terminal (not shown) provided on a surface 25 of the pack case 20. In this embodiment, the battery system 1 is connected to the load 60 of an electrically powered vehicle. The load 60 may include, but not be particularly limited to, an electric motor, an inverter, or the like of a vehicle, for example. The load 60 is supplied with electric power from the plurality of cells 10 of the battery system 1. The load 60 is not limited to such an embodiment, and the battery system 1 may be applicable to battery systems other than those incorporated in electrically powered vehicles.

### Plurality of Cells 10

The plurality of cells 10 each includes an electrode body (not shown) and a hermetically sealed cell case 11. Each of the cells 10 is an electricity storage device that is capable of extracting electric energy therefrom. Examples of the cell 10 include secondary batteries, in which repeated charging and discharging are possible by means of migration of charge carriers through an electrolyte between a pair of electrodes (positive electrode and negative electrode), including, for example, lithium-ion secondary batteries and nickel-metal hydride batteries. The form of connection of the plurality of cells 10 is not limited to any particular form. The plurality of cells 10 are electrically connected to each other via a bus bar to form a cell module (battery module) 10A. Note that the plurality of cells 10 may be connected in series, connected in parallel, or connected in a combination of series and parallel connections. In this embodiment, the plurality of cells 10 are connected in series to each other.

The hermetically sealed cell case 11 houses an electrode body. The cell case 11 is a substantially rectangular parallelepiped shaped container. Each cell case 11 may be formed of aluminum or an aluminum alloy, from the viewpoints of reducing weight and providing sufficient rigidity. The cell case 11 includes a first pressure valve 12. The first pressure valve 12 is configured to irreversibly rupture by a predetermined activation pressure. The activation pressure of the first pressure valve 12 is not limited to any particular pressure and may be determined as appropriate depending on the configuration and usage conditions of the cell 10. The first pressure valve 12 may function as a safety device that ruptures when the inside of the cell case 11 reaches a predetermined activation pressure, such as when an abnormality occurs in the cell 10 and a large amount of gas is generated rapidly within the cell case 11. This enables the gas generated in the cell case 11 to be released outside. The first pressure valve 12 may also be referred to as a safety vent. In this embodiment, the plurality of cells 10 are housed in the pack case 20 with their orientations aligned uniformly. The first pressure valves 12 respectively provided for the plurality of cells 10 are faced in the same direction (downward in Fig. 1) within the pack case 20.

The plurality of cells 10 (cell module 10A) are connected to the load 60 via the external output terminal to supply electric power to the load 60. The contactor unit 15 is provided between the plurality of cells 10 and the load 60.

### Contactor Unit 15

The contactor unit 15 switches connection between the cell module 10A and the load 60. The contactor unit 15 includes a pre-charge circuit 16 and main relays 17 and 18. The pre-charge circuit 16 and the main relay 17 are connected to a positive electrode side of the cell module 10A. The pre-charge circuit 16 and the main relay 17 are connected in parallel to each other. The main relay 18 is connected to a negative electrode side of the cell module 10A.

The pre-charge circuit 16 is a circuit including a pre-charge resistor 16a and a pre-charge relay 16b that are connected in series. The pre-charge circuit 16 is a circuit that prevents inrush current from flowing into the load 60 when electric power is supplied from the battery system 1 to the load 60. Before the load 60 is started up, the main relays 17 and 18 and the pre-charge relay 16b are in an open state. At the time of starting up the battery system 1 connected to the load 60, the main relay 18 and the pre-charge relay 16b are switched to a closed state. The load 60 is connected to the battery system 1 via the pre-charge circuit 16. At this time, because the pre-charge circuit 16 is provided with the pre-charge resistor 16a, the load 60 is supplied with electric power from the cell module 10A at a low current. Thereafter, with the potential of the load 60 being high, the main relay 17 is brought into the closed state, and subsequently, the pre-charge relay 16b is brought into the open state. This prevents large current from flowing into the load 60. The opening and closing of the main relays 17 and 18 and the pre-charge relay 16b is controlled by a later-described controller 50. In this embodiment, like the cell module 10A, the contactor unit 15 is disposed in the pack case 20.

### Pack Case 20

The pack case 20 is a hermetically sealed container for housing the plurality of cells 10 and so forth. The pack case 20 is in a substantially rectangular parallelepiped shape. The pack case 20 may be formed of aluminum or an aluminum alloy, from the viewpoints of reducing weight and providing sufficient rigidity. The pack case 20 includes a second pressure valve 22 that is to be released at a predetermined pressure. Unlike the first pressure valve 12 provided for the cell 10, the second pressure valve 22 has a configuration for adjusting the internal pressure when the pressure inside increases. Atter the internal pressure of the pack case 20 is adjusted, the second pressure valve 22 is closed to hermetically seal the inside of the pack case 20 again. The activation pressure of the second pressure valve 22 is not limited to any particular pressure, but may be determined as appropriate depending on the structure, usage conditions, and the like of the battery system 1,

The second pressure valve 22 is provided at a position that does not face the first pressure valves 12, provided in the plurality of cells 10. Providing the second pressure valve 22 at a position that does not face the first pressure valves 12 can reduce damages to the second pressure valve 22 caused by activation of the first pressure valves 12. In this embodiment, the second pressure valve 22 is provided on a surface 23 that faces the first pressure valves 12 and at a position 23a that does not face the first pressure valves 12. The second pressure valve 22 may be provided on other surfaces 24 to 26 of the pack case 20.

In some cases, in the battery system 1 in which the hermetically sealed pack case 20 houses the plurality of cells 10, an abnormality may occur in the cells 10 due to, for example, an unexpected impact from outside. In this case, various reactions may take place within the cell case 11 of the cell 10 in which the abnormality is occurring, generating a gas. This increases the pressure in the cell case 11. When the pressure in the cell case 11 reaches a predetermined activation pressure, the first pressure valve 12 irreversibly ruptures. As a consequence, the gas is released into the pack case 20. This may increase the pressure in the pack case 20. In addition, when an abnormality occurs in a cell 10, it is feared that the temperature of the cell 10 increases, for example.

In the battery system 1, the first abnormality detection sensor 30 and the second abnormality detection sensor 40, together with the cell module 10A, are housed inside the pack case 20.

### First Abnormality Detection Sensor 30

The first abnormality detection sensor 30 is a sensor that detects a pressure value in the pack case 20. The first abnormality detection sensor 30 is configured to, for example, detect the pressure value of the gas in the pack case 20 and output it to the controller 50. The first abnormality detection sensor 30 is not particular limited as long as it can detect the pressure value of the gas in the pack case 20. The first abnormality detection sensor 30 may be disposed at a position (position 23a in this embodiment) that does not face the first pressure valves 12. As a result, when the first pressure valve 12 is activated, the first abnormality detection sensor 30 is unlikely to be affected by the pressure value that can vary locally within a short time, and is likely to detect the pressure value stably.

It is also possible that a plurality of first abnormality detection sensors 30 may be provided in the pack case 20. When a plurality of first abnormality detection sensors 30 are provided, the first abnormality detection sensors 30 may be disposed so as to detect pressure values respectively at different positions in the pack case 20. This makes it easy to detect a pressure abnormality that occurs in the pack case 20 even when the size of the pack case 20 is large.

### Second Abnormality Detection Sensor 40

The second abnormality detection sensor 40 is a sensor that detects at least one of the detection values including a pressure value, a temperature, and a generated gas in the pack case 20. The second abnormality detection sensor 40 may employ a sensor that is able to detect an abnormality depending on the components or conditions of the gas in the pack case 20. In this embodiment, the second abnormality detection sensor 40 is a sensor that detects the pressure value in the pack case 20, like the first abnormality detection sensor 30. The second abnormality detection sensor 40 may be disposed at a position that does not face the first pressure valves 12. The second abnormality detection sensor 40 is configured to detect the pressure value of the gas in the pack case 20 and output it to the controller 50. The configuration of the second abnormality detection sensor 40 may be the same as that of the first abnormality detection sensor 30 and is therefore not elaborated on further.

### Controller 50

The controller 50 is configured to execute an abnormality determination process of determining whether or not an abnormality occurs in at least one cell 10 of the plurality of cells 10. The controller 50 also controls the contactor unit 15 to control connection and disconnection between the load 60 and the plurality of cells 10. The controller 50 may also be supplied with electric power from a power supply 80 provided external to the pack case 20. The controller 50 includes a first acquisition unit 51, a second acquisition unit 52, a communication unit 53, a determination unit 54, and an instruction unit 55. The various units 51 to 55 of the controller 50 may be implemented by a single processor or a plurality of processors, or may be incorporated in a circuit. The controller 50 is communicably connected to a higher-level controller 70 provided external to the pack case 20 via the communication unit 53.

The higher-level controller 70 controls the controller 50 that controls connection and disconnection between the load 60 and the plurality of cells 10. The higher-level controller 70 is communicably connected to the controller 50. The higher-level controller 70 may be an on-board ECU (Electronic Control Unit). In this embodiment, whether or not an abnormality is occurring in a cell 10 is determined by the controller 50. The following describes a process of determining an abnormality in a cell 10, which is executed in the controller 50.

In this embodiment, the controller 50 is notified of the pressure values detected by the first abnormality detection sensor 30 and the second abnormality detection sensor 40. The first abnormality detection sensor 30 and the second abnormality detection sensor 40 detect pressure values at predetermined intervals to notify the controller 50. The intervals at which the detection and the notification are performed may be, but is not particularly limited to, about 0.1 seconds to about 1 second.

When the controller 50 is notified of the pressure values detected by the first abnormality detection sensor 30 and the second abnormality detection sensor 40, the controller 50 executes an abnormality determination process of determining whether or not an abnormality is occurring in a cell 10.

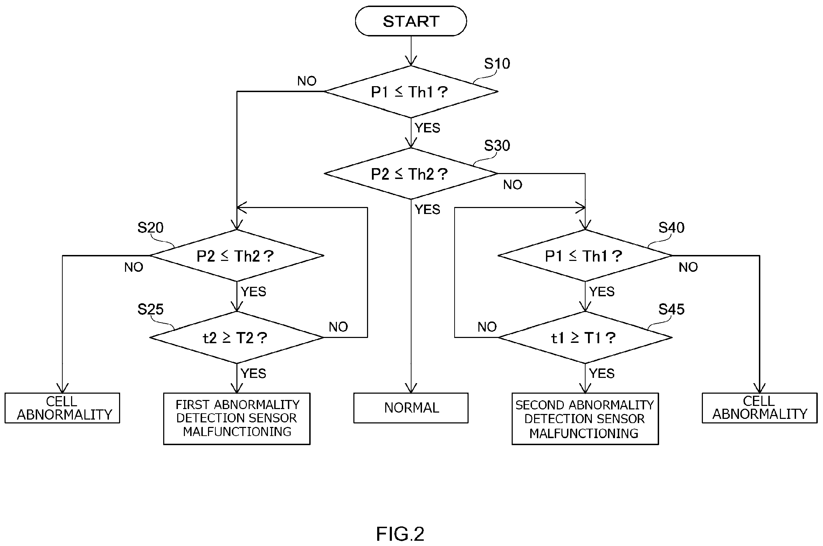

Fig. 2 is a flowchart illustrating processes executed by the controller 50. The controller 50 contains threshold values Th1 and Th2 for the pressure values that are notified respectively by the first abnormality detection sensor 30 and the second abnormality detection sensor 40. In this embodiment, the threshold value Th1 for the pressure value detected by the first abnormality detection sensor 30 is set at a value that is higher than the atmospheric pressure and lower than the activation pressure at which the second pressure valve 22 is activated. The threshold value Th2 for the pressure value detected by the second abnormality detection sensor 40 is set at the same value as the threshold value for the pressure value detected by the first abnormality detection sensor 30. It should be noted that the threshold values Th1 and Th2 detected by the first abnormality detection sensor 30 and the second abnormality detection sensor 40 respectively may be different.

When the controller 50 is started up, the abnormality determination process is started. The abnormality determination process may always be executed at the time of starting up the battery system 1. At step S10 shown in Fig. 2, the first acquisition unit 51 of the controller 50 acquires the pressure value detected by the first abnormality detection sensor 30 (hereinafter also referred to as a "first pressure value P1"). The determination unit 54 determines whether or not the first pressure value P1 is less than or equal to the threshold value Th1. If the first pressure value P1 is less than or equal to the threshold value Th1 (YES), the process proceeds to step S30.

At step S30 shown in Fig. 2, the second acquisition unit 52 of the controller 50 acquires the pressure value detected by the second abnormality detection sensor 40 (hereinafter also referred to as a "second pressure value P2"). The determination unit 54 determines whether or not the second pressure value P2 is less than or equal to the threshold value Th2. If the second pressure value P2 is less than or equal to the threshold value Th2 (YES), it is determined that the plurality of cells 10 in the pack case 20 are normal. Note that when the battery system 1 is operating, the abnormality determination process is started again. The abnormality determination process may be executed until the battery system 1 is stopped.

At step S10 shown in Fig. 2, if the first pressure value P1 is higher than the threshold value Th1 (NO), the process proceeds to step S20. At step S20 shown in Fig. 2, it is determined whether or not the second pressure value P2 is less than or equal to the threshold value Th2, as in step S30. Like the first pressure value P1, if the second pressure value P2 is higher than the threshold value Th2 (NO), it is determined that an abnormality is occurring in at least one of the plurality of cells 10 in the pack case 20.

Thus, in the battery system 1, the controller 50 determines that an abnormality is occurring in at least one cell 10 of the plurality of cells 10 if the first pressure value P1 detected by the first abnormality detection sensor 30 is higher than a predetermined threshold value Th1 and a detection value (the second pressure value P2 in this embodiment) detected by the second abnormality detection sensor 40 is higher than a predetermined threshold value Th2.

In the above-described embodiment, the battery system 1 includes the first abnormality detection sensor 30 that detects a pressure value in the pack case 20. When an abnormality occurs in any one cell 10 of the plurality of cells 10, this allows the battery system 1 to detect an increase of the pressure value in the pack case 20 resulting from the gas emitted from the one of the plurality of cells 10 in which the abnormality has occurred. The battery system 1 also includes the second abnormality detection sensor 40. This allows the battery system 1 to detect an abnormality with higher accuracy. When it is determined that an abnormality is occurring in a cell 10 of the battery system 1, the higher-level controller 70 may be notified by the controller 50 that the abnormality is occurring in the cell 10. The user may be notified by the higher-level controller 70 that the abnormality is occurring in the cell 10. This enables the user to recognize that the abnormality is occurring in the cell 10 of the battery system 1 so that the user can take an appropriate action, such as inspection, repair, and the like.

In the above-described embodiment, the threshold value Th1 for the first pressure value P1 detected by the first abnormality detection sensor 30 is set at a value that is higher than the atmospheric pressure and lower than the activation pressure at which the second pressure valve 22 is activated. This allows the battery system 1 to easily detect the abnormality in the cell 10 at the stage before the second pressure valve 22 is activated and the gas in the pack is released.

In the above-described embodiment, the second abnormality detection sensor 40 is a sensor that detects a pressure value in the pack case 20. The second abnormality detection sensor 40 detects the pressure value in the pack case 20, like the first abnormality detection sensor 30. Because both the first abnormality detection sensor 30 and the second abnormality detection sensor 40 use the same detection value as the guideline to determine an abnormality in a cell 10, it is unlikely to cause a discrepancy in determination conditions between the sensors. This makes it possible to detect an abnormality in a cell 10 more quickly with higher accuracy.

In the battery system 1, it is possible that when an abnormality is detected in a cell 10, the plurality of cells 10 may be disconnected from the load 60 in order to ensure safety. In this embodiment, the controller 50 is configured to execute a process of controlling the contactor unit 15 to be brought into an open state when an abnormality has detected in a cell 10 in the abnormality determination process. If the determination unit 54 of the controller 50 determines that an abnormality is occurring in a cell 10, the instruction unit 55 controls the contactor unit 15 to be in an open state. In this embodiment, at least one of the main relays 17 and 18 is controlled to be in the open state. Safety may be improved by disconnecting the cell 10 from the load 60 in the event of abnormally in the cell 10.

In addition, the battery system 1 may be provided with a mechanism that determines whether or not one of the first abnormality detection sensor 30 and the second abnormality detection sensor 40 is malfunctioning. In this embodiment, the controller 50 is configured to execute a failure determination process of determining whether or not one of the first abnormality detection sensor 30 and the second abnormality detection sensor 40 is malfunctioning.

After it has been determined that the first pressure value P1 is higher than the threshold value Th1 (NO) at the above-described step S10, if the second pressure value P2 is higher than the threshold value Th2 (YES) at step S20, the process proceeds to step S25. At step S25 shown in Fig. 2, it is determined whether or not an elapsed time t2 after it has been determined that the second pressure value P2 is less than or equal to the threshold value Th2 at step S20 exceeds a predetermined time T2. The predetermined time T2 may be predetermined within a range long enough to detect an abnormality in a sensor and also the abnormality in the sensor does not cause problems in the operation of the battery system 1.

If the elapsed time t2 does not exceed a predetermined time T2 (NO) at step S25, the process returns to step S20. The process of determining whether or not the second pressure value P2 is less than or equal to the threshold value Th2 is executed again. Here, if it is determined that the second pressure value P2 is higher than the threshold value Th2 (NO) at step S20, it means that both the first pressure value P1 and the second pressure value P2 are determined to be higher than the respective threshold values Th1 and Th2. Therefore, it is determined that an abnormality is occurring in a cell 10 of the battery system 1, as described above.

If the elapsed time t2 exceeds the predetermined time T2 (YES) at step S25, it means that the first pressure value P1 is higher than the threshold value Th1 and that the second pressure value P2 has continued to be less than or equal to the threshold value Th2. In this case, the determinations for the first abnormality detection sensor 30 and the second abnormality detection sensor 40 are different. Here, although the second pressure value P2 is less than or equal to the threshold value Th2 over a predetermined time T2, the first pressure value P1 is higher than the threshold value Th1. The determination unit 54 determines that the first abnormality detection sensor 30 is malfunctioning. The communication unit 53 of the controller 50 notifies the higher-level controller 70 that the first abnormality detection sensor 30 may be malfunctioning. This enables the user to recognize that the abnormality is occurring in the first abnormality detection sensor 30 of the battery system 1 so that the user can take an appropriate action, such as inspection, repair, and the like.

After it has been determined that the second pressure value P2 is higher than the threshold value Th2 (NO) at step S30 described above, it is determined whether or not the first pressure value P1 is less than or equal to the threshold value Th1 at step S40 shown in Fig. 2, as in step S10. If the first pressure value P1 is higher than the threshold value Th1 (NO), it means that both the first pressure value P1 and the second pressure value P2 are determined to be higher than the respective threshold values Th1 and Th2. Therefore, it is determined that an abnormality is occurring in at least one cell 10 of the plurality of cells 10 in the pack case 20. If the first pressure value P1 is less than or equal to the threshold value Th1 (YES) at step S40, the process proceeds to step S45. At step S45 shown in Fig. 2, it is determined whether or not an elapsed time t1 after it has been determined that the first pressure value P1 is less than or equal to the threshold value Th1 at step S40 exceeds a predetermined time T1. The predetermined time T1 may be either the same as or different from the previously-mentioned predetermined time T2.

If the elapsed time t1 does not exceed the predetermined time T1 (NO) at step S45, the process returns to step S40, to execute the process of determining whether or not the first pressure value P1 is less than or equal to the threshold value Th1. Here, if the first pressure value P1 is determined to be higher than the threshold value Th1, it is determined that an abnormality is occurring in a cell 10 of the battery system 1.

If the elapsed time t1 exceeds the predetermined time T1 (YES) at step S45, it means that the second pressure value P2 is higher than the threshold value Th2 and that the first pressure value P1 has continued to be less than or equal to the threshold value Th1. In this case, the determinations for the first abnormality detection sensor 30 and the second abnormality detection sensor 40 are different. Here, although the first pressure value P1 is less than or equal to the threshold value Th1 over the predetermined time T1, the second pressure value P2 is higher than the threshold value Th2. The determination unit 54 determines that the second abnormality detection sensor 40 is malfunctioning. The communication unit 53 of the controller 50 notifies the higher-level controller 70 that the second abnormality detection sensor 40 may be malfunctioning. This enables the user to recognize that the abnormality is occurring in the second abnormality detection sensor 40 of the battery system 1 so that the user can take an appropriate action, such as inspection, repair, and the like.

Thus, in the battery system 1, it is determined that one of the first abnormality detection sensor 30 and the second abnormality detection sensor 40 is malfunctioning when predetermined time T1 or T2 has elapsed under the condition in which one of the first pressure value P1 detected by the first abnormality detection sensor 30 and the detection value (the second pressure value P2 in this embodiment) detected by the second abnormality detection sensor 40 is higher than a predetermined threshold value and the other one is less than or equal to the predetermined threshold value.

Note that the battery system 1 may be configured to be switched between a low power consumption mode, in which electric power consumption is reduced, and a normal mode, in which electric power is supplied to the load 60. For example, in the case where the battery system 1 is used as a vehicle on-board battery, the battery system 1 may be switched to the low power consumption mode when, for example, the power of the electrically powered vehicle is off and to the normal mode when, for example, the electrically powered vehicle is in operation. The battery system 1 may be switched to the normal mode also when charged.

In this embodiment, the controller 50 is configured to be switchable between the low power consumption mode and the normal mode. In the normal mode, the process described above is executed to execute the process of detecting an abnormality in a cell 10 contained in the battery system 1. In the low power consumption mode, it may be possible to execute a different process from the process described above. For example, in order to reduce power consumption, it may be possible to stop the processes such as the abnormality detection process described above.

In this embodiment, the process for detecting an abnormality in a cell 10 at an early stage is executed also in the low power consumption mode. Herein, the first acquisition unit 51 and the second acquisition unit 52 of the controller 50 acquire the pressure value (first pressure value P1) detected by the first abnormality detection sensor 30 and the detection value (second pressure value P2) detected by the second abnormality detection sensor 40, respectively. The determination unit 54 determines whether or not at least one of the pressure value detected by the first abnormality detection sensor 30 and the detection value detected by the second abnormality detection sensor 40 is higher than a predetermined threshold value. Here, it is determined whether or not the first pressure value P1 is higher than the threshold value Th1, and it is determined whether or not the second pressure value P2 is higher than the threshold value Th2. If at least one of the first pressure value P1 and the second pressure value P2 is higher than a threshold value, the instruction unit 55 provides an instruction to switch from the low power consumption mode to the normal mode. When the battery system 1 is switched from the low power consumption mode to the normal mode, the above-described abnormality detection process is executed. This makes it possible to detect an abnormality in a cell 10 that may occur after the switching to the low power consumption mode quickly.

In this embodiment, the first abnormality detection sensor 30 and the second abnormality detection sensor 40 are provided so that they can check each other if they are operating properly by the control of the controller 50. However, the battery system 1 is not limited to such an embodiment, but may be provided with a self-diagnostic function for checking if, for example, the first abnormality detection sensor 30 itself is operating properly. The self-diagnostic function may be provided in the first abnormality detection sensor 30 or may be configured to operate in cooperation with the controller 50. It is also possible that the self-diagnostic function may be provided to thereby detect an abnormality in a cell 10 without using the second abnormality detection sensor 40. This may reduce the space required by the battery system 1.

In the above-described embodiment, the second abnormality detection sensor 40 is a sensor that detects a pressure value in the pack case 20. However, the second abnormality detection sensor 40 is not limited to such an embodiment.

For example, the second abnormality detection sensor 40 may be a sensor that detects the temperature in the pack case 20. When a temperature sensor is used as the second abnormality detection sensor 40, the second abnormality detection sensor 40 may be disposed, for example, in a passage of the gas that is discharged from the first pressure valve 12 when an abnormality occurs in a cell 10. By detecting the temperature of high-temperature gas discharged from the cell 10 with the second abnormality detection sensor 40, an abnormality in the cell 10 may be detected at an early stage. The threshold value used when determining an abnormality in a cell 10 according to the detection value (temperature) detected by the temperature sensor may be set as appropriate depending on the configuration, specification, and the like of the cell 10.

Alternatively, the second abnormality detection sensor 40 may be a sensor that detects the generated gas in the pack case 20. When a gas sensor is used as the second abnormality detection sensor 40, the second abnormality detection sensor 40 may be disposed, for example, in a passage of the gas that is discharged from the first pressure valve 12 when an abnormality occurs in a cell 10. By detecting a given gas that is discharged from the cell 10 with the second abnormality detection sensor 40, an abnormality in the cell 10 may be detected at an early stage. When a gas sensor is used as the second abnormality detection sensor 40, the threshold value used when determining an abnormality in the cell 10 may be set according to the components and concentration of the gas. Examples of the components of the gas to be detected by the gas sensor include, but are not particularly limited to, carbon dioxide, hydrocarbon, and the like. The components, gas concentrations, and the like that are to be detected by the gas sensor may be set as appropriate depending on the configuration, specification, and the like of the cell 10. The gas sensor may be a sensor that detects smoke.

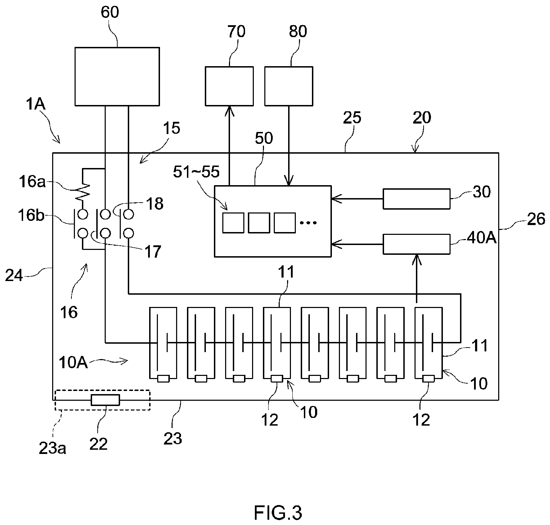

Alternatively, the second abnormality detection sensor 40 may be a sensor that detects the voltage value of the cells in the pack case. Fig. 3 is a schematic view illustrating a battery system 1A according to another embodiment. In the description of the battery system 1A shown in Fig. 3, the features and components that exhibit the same effects are designated by the same reference symbols as appropriate, and the description thereof will not be repeated as appropriate.

### Battery System 1A

As illustrated in Fig. 3, the battery system 1A includes a plurality of cells 10, a pack case 20, a first abnormality detection sensor 30, a second abnormality detection sensor 40A, and a controller 50. The first abnormality detection sensor 30 and the second abnormality detection sensor 40A are disposed in the pack case 20. The battery system 1A may have the same configuration as that of the battery system 1 (see Fig. 1) except that it employs the second abnormality detection sensor 40A in place of the second abnormality detection sensor 40 (see Fig. 1).

### Second Abnormality Detection Sensor 40A

The second abnormality detection sensor 40A is a sensor that detects at least one of the detection values including a pressure value, a temperature, and a generated gas in the pack case 20, and a voltage of a cell 10. The second abnormality detection sensor 40A may be the same as the second abnormality detection sensor 40 (see Fig. 1) except that it is configured to be able to detect a voltage value of the cell 10. The second abnormality detection sensor 40A may be a voltage sensor. The second abnormality detection sensor 40A may be composed of either a plurality of sensors or a single sensor (a voltage sensor, for example). The second abnormality detection sensor 40A may be composed of a combination of a voltage sensor and a sensor that detects at least one of the detection values including a pressure value, a temperature, and a generated gas.

In this embodiment, the second abnormality detection sensor 40Ais a sensor that detects the voltage of a cell 10. Herein, the term "the voltage of a cell 10" means the voltage of at least one cell 10 of the plurality of cells 10. The second abnormality detection sensor 40A may detect respective voltage values of the cells 10. The second abnormality detection sensor 40A may detect one or a plurality of voltage values of the plurality of cells 10, or may detect the voltage value of the plurality of cells 10 as a whole (i.e., the total voltage thereof). In this embodiment, the second abnormality detection sensor 40A detects respective voltage values of the cells 10. The voltage values detected by the second abnormality detection sensor 40A are transmitted to the controller 50.

The controller 50 contains a threshold value for the voltage values transmitted from the second abnormality detection sensor 40A. The controller 50 determines that an abnormality is occurring in at least one of the plurality of cells 10 if the voltage value detected by the second abnormality detection sensor 40A is lower than a predetermined threshold value.

The threshold value may vary depending on the characteristics of the cells 10 used for the battery system 1A. For this reason, the threshold value may be set after the voltage characteristics of the cells 10 have been checked by testing or the like. According to the trials carried out by the present inventor, it was confirmed that when an abnormality occurs in one cell 10 of the plurality of cells 10, the voltage of the cell 10 that caused the abnormality also suddenly dropped at the time when gas is discharged from the cell 10 that caused the abnormality. The threshold value for the voltage value may be set to the end voltage of the cell 10, for example.

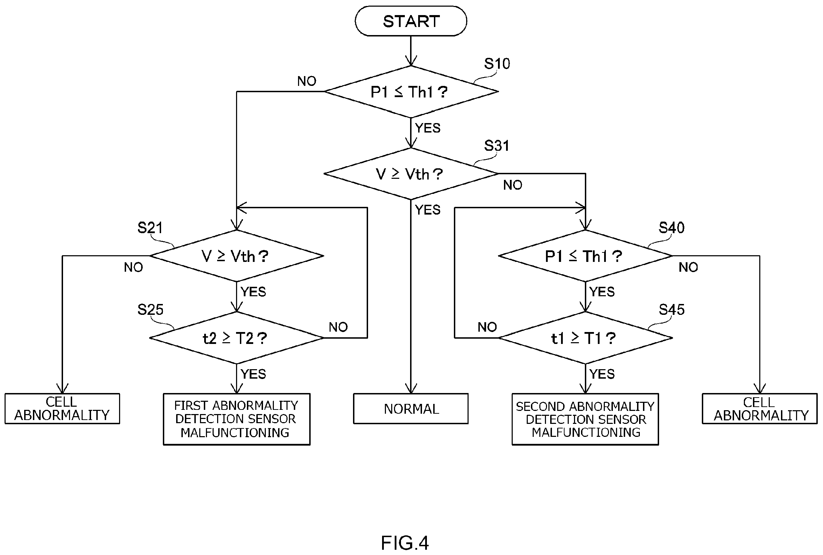

Fig. 4 is a flowchart illustrating processes executed by the controller 50 of the battery system 1A. In Fig. 4, the processes are the same as those shown in Fig. 2, except that the determinations of steps S21 and S31 are performed in place of steps S20 and S30 of Fig. 2, and therefore, repetitive description thereof may be omitted as appropriate.

If it is determined at step S10 that the first pressure value P1 is less than or equal to the threshold value Th1 (YES), the process proceeds to step S31 shown in Fig. 4. At step S31, it is determined whether or not the voltage value V is higher than or equal to a threshold value Vth. If the voltage value V is higher than or equal to the threshold value Vth (YES), it is determined that the plurality of cells 10 in the pack case 20 are normal. If it is determined at step S31 that the voltage value V is lower than the threshold value Vth (NO), the process proceeds to step S40. After step S40 onward, the same processes as described with reference to Fig. 2 may be executed.

If it is determined at step S10 that the first pressure value P1 is higher the threshold value Th1 (NO), the process proceeds to step S21 shown in Fig. 4. At step S21, it is determined whether or not the voltage value V is higher than or equal to the threshold value Vth. If the voltage value V is lower than the threshold value Vth (NO), it is determined that an abnormality is occurring in at least one of the plurality of cells 10 in the pack case 20. If it is determined at step S21 that the voltage value V is higher than or equal to the threshold value Vth (YES), the process proceeds to step S25. After step S25 onward, the same processes as described with reference to Fig. 2 may be executed.

The use of the second abnormality detection sensor 40A that detects the voltage of a cell 10 enables detection of a decrease of the voltage value of a cell 10, in addition to an increase of the pressure value in the pack case 20. As a result, it is possible to detect an abnormality in a cell 10 at an early stage. Moreover, when the second abnormality detection sensor 40A is able to detect each of the voltage values of the plurality of cells 10, it is possible to detect the abnormality occurred in which one of the cells 10 in the pack case 20. As a result, it is easier to take measures after the abnormality has occurred.

According to the present disclosure, a battery system includes a plurality of cells, a hermetically sealed pack case, a first abnormality detection sensor, a second abnormality detection sensor, and a controller. The pack case houses a plurality of cells. The first abnormality detection sensor is disposed in the pack case. The second abnormality detection sensor is disposed in the pack case. Each of the plurality of cells includes an electrode body and a hermetically sealed cell case housing the electrode body. The cell case includes a first pressure valve configured to irreversibly rupture by a predetermined activation pressure. The pack case includes a second pressure valve to be released at a predetermined pressure. The first abnormality detection sensor is a sensor that detects a pressure value in the pack case. The second abnormality detection sensor is a sensor that detects at least one of detection values, the detection values including a pressure value in the pack case, a temperature in the pack case, and a generated gas in the pack case, and a voltage value of at least one of the plurality of cells. When the second abnormality detection sensor is a sensor that detects at least one of detection values including the pressure value, the temperature, and the generated gas in the pack case, the controller is configured to execute an abnormality determination process of determining that an abnormality is occurring in at least one of the plurality of cells if the pressure value detected by the first abnormality detection sensor is higher than a predetermined threshold value and the detection value detected by the second abnormality detection sensor is higher than a predetermined threshold value. when the second abnormality detection sensor is a sensor detecting the voltage value of at least one of the plurality of cells, an abnormality determination process of determining that an abnormality is occurring in at least one of the plurality of cells if the pressure value detected by the first abnormality detection sensor is higher than a predetermined threshold value and the voltage value detected by the second abnormality detection sensor is lower than a predetermined threshold value. The just-described battery system provides good accuracy in detecting an abnormality that occurs in the cells.

Various embodiments of the technology according to the present disclosure have been described hereinabove. Unless specifically stated otherwise, the embodiments described herein do not limit the scope of the present disclosure. It should be noted that various other modifications and alterations may be possible in the embodiments of the technology disclosed herein. In addition, the features, structures, or steps described herein may be omitted as appropriate, or may be combined in any suitable combinations, unless specifically stated otherwise. In addition, the present description includes the disclosure as set forth in the following items.

Item 1:
A battery system including:
   a plurality of cells;
   a hermetically sealed pack case housing the plurality of cells;
   a first abnormality detection sensor disposed in the pack case;
   a second abnormality detection sensor disposed in the pack case; and
   a controller; wherein:
each of the plurality of cells includes an electrode body and a hermetically sealed cell case housing the electrode body;
the cell case includes a first pressure valve configured to irreversibly rupture by a predetermined activation pressure;
the pack case includes a second pressure valve to be released at a predetermined pressure;
the first abnormality detection sensor is a sensor detecting a pressure value in the pack case;
the second abnormality detection sensor is a sensor detecting at least one of detection values, the detection values including a pressure value in the pack case, a temperature in the pack case, and a generated gas in the pack case, and a voltage value of at least one of the plurality of cells; and
the controller is configured to execute:
   when the second abnormality detection sensor is a sensor detecting at least one of detection values including the pressure value, the temperature, and the generated gas in the pack case, an abnormality determination process of determining that an abnormality is occurring in at least one of the plurality of cells if the pressure value detected by the first abnormality detection sensor is higher than a predetermined threshold value and the detection value detected by the second abnormality detection sensor is higher than a predetermined threshold value; and
   when the second abnormality detection sensor is a sensor detecting the voltage value of at least one of the plurality of cells, an abnormality determination process of determining that an abnormality is occurring in at least one of the plurality of cells if the pressure value detected by the first abnormality detection sensor is higher than a predetermined threshold value and the voltage value detected by the second abnormality detection sensor is lower than a predetermined threshold value.

Item 2:
The battery system according to item 1, wherein the first abnormality detection sensor and the second abnormality detection sensor are disposed at respective positions that do not face the first pressure valve.

Item 3:
The battery system according to item 1 or 2, wherein the threshold value for the pressure value detected by the first abnormality detection sensor is set at a value that is higher than atmospheric pressure and lower than an activation pressure at which the second pressure valve is activated.

Item 4:
The battery system according to any one of items 1 to 3, wherein:
the controller is configured to be switchable between a low power consumption mode and a normal mode; and
in the low power consumption mode, the controller is configured to execute a process of acquiring the pressure value detected by the first abnormality detection sensor and the detection value detected by the second abnormality detection sensor, and to switch from the low power consumption mode to the normal mode to execute the abnormality determination process when at least one of the pressure value detected by the first abnormality detection sensor and the detection value detected by the second abnormality detection sensor is higher than a predetermined threshold value.

Item 5:
The battery system according to any one of items 1 to 4, further including:
a contactor unit switching connection between the plurality of cells and a load, and wherein
the controller is configured to execute a process of controlling the contactor unit to be in an open state if an abnormality in the cells is detected in the abnormality determination process.

Item 6:
The battery system according to any one of items 1 to 5, wherein the second abnormality detection sensor is a sensor detecting the pressure value in the pack case.

Item 7:
The battery system according to any one of items 1 to 5, wherein the second abnormality detection sensor is a sensor detecting the temperature in the pack case.

Item 8:
The battery system according to any one of items 1 to 5, wherein the second abnormality detection sensor is a sensor detecting the generated gas in the pack case.

Item 9:
The battery system according to any one of items 1 to 8, wherein the controller is configured to execute a process of determining that one of the first abnormality detection sensor and the second abnormality detection sensor is malfunctioning when a predetermined time has elapsed under a condition in which one of the pressure value detected by the first abnormality detection sensor and the detection value detected by the second abnormality detection sensor is higher than a predetermined threshold value and the other one is less than or equal to the predetermined threshold value.

Item 10:
The battery system according to any one of items 1 to 9, wherein the second abnormality detection sensor is a sensor detecting at least one of detection values including the pressure value, the temperature, and the generated gas in the pack case.

Item 11:
The battery system according to any one of items 1 to 9, wherein the second abnormality detection sensor is a sensor detecting the voltage value of at least one of the plurality of cells.

## Claims

1. A battery system (1,1A) comprising:
a plurality of cells (10);
a hermetically sealed pack case (20) housing the plurality of cells (10);
a first abnormality detection sensor (30) disposed in the pack case (20);
a second abnormality detection sensor (40,40A) disposed in the pack case (20); and
a controller (50); wherein:
each of the plurality of cells (10) includes an electrode body and a hermetically sealed cell case (11) housing the electrode body;
the cell case (11) includes a first pressure valve (12) configured to irreversibly rupture by a predetermined activation pressure;
the pack case (20) includes a second pressure valve (22) to be released at a predetermined pressure;
the first abnormality detection sensor (30) is a sensor detecting a pressure value in the pack case (20);
the second abnormality detection sensor (40,40A) is a sensor detecting at least one of detection values, the detection values including a pressure value in the pack case (20), a temperature in the pack case (20), and a generated gas in the pack case (20), and a voltage value of at least one of the plurality of cells (10); and
the controller (50) is configured to execute:
when the second abnormality detection sensor (40,40A) is a sensor detecting at least one of detection values including the pressure value, the temperature, and the generated gas in the pack case (20), an abnormality determination process of determining that an abnormality is occurring in at least one of the plurality of cells (10) if the pressure value detected by the first abnormality detection sensor (30) is higher than a predetermined threshold value and the detection value detected by the second abnormality detection sensor (40,40A) is higher than a predetermined threshold value; and
when the second abnormality detection sensor (40,40A) is a sensor detecting the voltage value of at least one of the plurality of cells (10), an abnormality determination process of determining that an abnormality is occurring in at least one of the plurality of cells (10) if the pressure value detected by the first abnormality detection sensor (30) is higher than a predetermined threshold value and the voltage value detected by the second abnormality detection sensor (40,40A) is lower than a predetermined threshold value.

2. The battery system (1,1A) according to claim 1, wherein the first abnormality detection sensor (30) and the second abnormality detection sensor (40,40A) are disposed at respective positions that do not face the first pressure valve (12).

3. The battery system (1,1A) according to claim 1 or 2, wherein the threshold value for the pressure value detected by the first abnormality detection sensor (30) is set at a value that is higher than atmospheric pressure and lower than an activation pressure at which the second pressure valve (22) is activated.

4. The battery system (1,1A) according to claim 1 or 2, wherein:
the controller (50) is configured to be switchable between a low power consumption mode and a normal mode; and
in the low power consumption mode, the controller (50) is configured to execute a process of acquiring the pressure value detected by the first abnormality detection sensor (30) and the detection value detected by the second abnormality detection sensor (40,40A), and to switch from the low power consumption mode to the normal mode to execute the abnormality determination process when at least one of the pressure value detected by the first abnormality detection sensor (30) and the detection value detected by the second abnormality detection sensor (40,40A) is higher than a predetermined threshold value.

5. The battery system (1,1A) according to claim 1 or 2, further comprising:
a contactor unit switching connection between the plurality of cells (10) and a load, and wherein
the controller (50) is configured to execute a process of controlling the contactor unit to be in an open state if an abnormality in the cells (10) is detected in the abnormality determination process.

6. The battery system (1) according to claim 1 or 2, wherein the second abnormality detection sensor (40) is a sensor detecting the pressure value in the pack case (20).

7. The battery system (1) according to claim 1 or 2, wherein the second abnormality detection sensor (40) is a sensor detecting the temperature in the pack case (20).

8. The battery system (1) according to claim 1 or 2, wherein the second abnormality detection sensor (40) is a sensor detecting the generated gas in the pack case (20).

9. The battery system (1,1A) according to claim 1 or 2, wherein the controller (50) is configured to execute a process of determining that one of the first abnormality detection sensor (30) and the second abnormality detection sensor (40,40A) is malfunctioning when a predetermined time has elapsed under a condition in which one of the pressure value detected by the first abnormality detection sensor (30) and the detection value detected by the second abnormality detection sensor (40,40A) is higher than a predetermined threshold value and the other one is less than or equal to the predetermined threshold value.

10. The battery system (1) according to claim 1 or 2, wherein the second abnormality detection sensor (40) is a sensor detecting at least one of detection values including the pressure value, the temperature, and the generated gas in the pack case (20).

11. The battery system (1A) according to claim 1 or 2, wherein the second abnormality detection sensor (40A) is a sensor detecting the voltage value of at least one of the plurality of cells (10).
